# EUROPÄISCHE PATENTSCHRIFT

(11) **EP 3 242 466 B1**
(45) Veröffentlichungstag und Bekanntmachung des Hinweises auf die Patenterteilung: **17.04.2019**
(21) Anmeldenummer: 16168342.0
(22) Anmeldetag: 04.05.2016
(51) Int. Cl.: H04L 29/12, H04L 29/08

(54) **VERFAHREN ZUR KONFIGURATION VON KOMMUNIKATIONSGERÄTEN EINES INDUSTRIELLEN AUTOMATISIERUNGSSYSTEMS UND KONFIGURATIONSDATENVERTEILEREINHEIT**
METHOD FOR CONFIGURING COMMUNICATION DEVICES OF AN INDUSTRIAL AUTOMATION SYSTEM AND CONFIGURATION DATA DISTRIBUTOR UNIT
PROCÉDÉ DE CONFIGURATION DE DISPOSITIFS DE COMMUNICATION D'UN SYSTÈME D'AUTOMATISATION INDUSTRIEL ET UNITÉ DE DISTRIBUTION DE DONNÉES DE CONFIGURATION

(43) Veröffentlichungstag der Anmeldung: 08.11.2017
(73) Patentinhaber: Siemens Aktiengesellschaft, 80333 München (DE)
(72) Erfinder: Albrecht, Harald, 90475 Nürnberg (DE)

(56) Entgegenhaltungen:
- TROAN R DROMS CISCO SYSTEMS O: "IPv6 Prefix Options for Dynamic Host Configuration Protocol (DHCP) version 6; rfc3633.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, INTERNET ENGINEERING TASK FORCE, IETF, CH, 1. Dezember 2003 (2003-12-01), XP015009415, ISSN: 0000-0003
- DROMS R ET AL: "Dynamic Host Configuration Protocol for IPv6 (DHCPv6); rfc3315.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, INTERNET ENGINEERING TASK FORCE, IETF, CH, 1. Juli 2003 (2003-07-01), XP015009185, ISSN: 0000-0003
- TROAN B VOLZ CISCO SYSTEMS O ET AL: "Issues and Recommendations with Multiple Stateful DHCPv6 Options; rfc7550.txt", ISSUES AND RECOMMENDATIONS WITH MULTIPLE STATEFUL DHCPV6 OPTIONS; RFC7550.TXT, INTERNET ENGINEERING TASK FORCE, IETF; STANDARD, INTERNET SOCIETY (ISOC) 4, RUE DES FALAISES CH- 1205 GENEVA, SWITZERLAND, 20. Mai 2015 (2015-05-20), Seiten 1-24, XP015106176, [gefunden am 2015-05-20]

## Beschreibung

In verteilten industriellen Automatisierungssystemen ist bei einer Erfassung, Auswertung und Übermittlung von Mess- und Steuerungsdaten sicherzustellen, dass vollständige und unveränderte Daten insbesondere bei zeitkritischen industriellen Produktionsprozessen in Echtzeit vorliegen. Absichtliche, unabsichtliche oder durch einen technischen Fehler bedingte Veränderungen sind zu vermeiden.

Üblicherweise umfasst ein industrielles Automatisierungssystem eine Vielzahl von industriellen Automatisierungsgeräten, die über ein industrielles Kommunikationsnetz miteinander vernetzt sind und im Rahmen einer Fertigungs- oder Prozessautomatisierung zur Steuerung oder Regelung von Anlagen, Maschinen bzw. Geräten dienen. Aufgrund zeitkritischer Rahmenbedingungen in technischen Systemen, die mittels industrieller Automatisierungsgeräte automatisiert sind, werden in industriellen Kommunikationsnetzen zur Kommunikation zwischen Automatisierungsgeräten überwiegend Echzeit-Kommunikationsprotokolle, wie PROFINET, PROFIBUS oder Real-Time-Ethernet, verwendet.

Äußerst problematisch sind Unterbrechungen von Kommunikationsverbindungen zwischen Rechnereinheiten eines industriellen Automatisierungssystems oder industriellen Automatisierungsgeräten, da dies neben einem Informationsverlust beispielsweise zu einer unerwünschten oder unnötigen Wiederholung einer Übermittlung einer Dienstanforderung führen kann. Hierdurch wird eine zusätzliche Auslastung von Kommunikationsverbindungen des industriellen Automatisierungssystems verursacht, was zu weiteren Systemstörungen oder -fehlern führen kann. Darüber hinaus können nicht oder nicht vollständig übermittelte Nachrichten beispielsweise einen Übergang oder Verbleib eines industriellen Automatisierungssystems in einen sicheren Betriebszustand verhindern. Im ungünstigsten Fall kann es zu einem Ausfall einer kompletten Produktionsanlage und zu einem kostspieligen Produktionsstillstand kommen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aus EP 2 940 926 A1 ist bekannt, dass eine Konfigurationseinheit eines Kommunikationsgeräts zur Konfiguration des Kommunikationsgeräts ein Datagramm mit einer Konfigurationsanforderung an einen Konfigurationsserver übermittelt. Der Konfigurationsserver weist dem Kommunikationsgerät auf die Konfigurationsanforderung zumindest einen ersten topologischen Gerätenamensbestandteil zu, der einer räumlichen oder hierarchischen Anordnung des Konfigurationsservers zugeordnet ist. Durch jede weiterleitende Verteilereinheit wird ein weiterer topologischer Gerätenamensbestandteil ergänzt, der einer räumlichen oder hierarchischen Anordnung der jeweiligen weiterleitenden Verteilereinheit zugeordnet ist. Die Konfigurationseinheit des Kommunikationsgeräts erzeugt aus den topologischen Gerätenamensbestandteilen und einem innerhalb seines Teilnetzes eindeutigen Namensbestandteil dessen Gerätenamen.

In EP 2 975 827 A1 ist beschrieben, dass zur Konfiguration von Kommunikationsgeräten erste Konfigurationsinformationen für die Kommunikationsgeräte mittels Routerbekanntgabe-Nachrichten durch zumindest einen Router innerhalb eines Teilnetzes an vom jeweiligen Teilnetz umfasste Kommunikationsgeräte übermittelt werden. Die ersten Konfigurationsinformationen umfassen Steuerungsinformationen mit Angaben über zweite Konfigurationsinformationen, die durch zumindest einen Konfigurationsserver bereitgestellt werden. Mittels Kommunikationsgeräte- oder Router-seitiger Diagnoseeinheiten wird überprüft, ob die ersten Konfigurationsinformationen innerhalb des jeweiligen Teilnetzes zueinander konsistente Steuerungsinformationen umfassen. Bei einem Vorliegen inkonsistenter Steuerungsinformationen werden die Kommunikationsgeräte entsprechend ersten Konfigurationsinformationen konfiguriert, die durch zumindest einen vor Vorliegen der inkonsistenten Steuerungsinformationen für eine Konfiguration maßgeblichen Router übermittelt werden.

Aus dem IETF-Standard-Entwurf RFC 3315 (https://tools.ietf. org/html/rfc3315) ist bekannt, dass entsprechend Dynamic Host Configuration Protocol for IPv6 (DHCPv6) DHCP-Servers Konfigurationsparameter, wie IPv6-Adressen, zur Auswahl und Anforderung an Netzknoten übermitteln. Insbesondere ermöglicht DHCPv6 eine automatische Allokierung wiederbenutzbarer IPv6-Adressen und - im Gegensatz zur einer Stateless Adress Autoconfiguration - eine zustandsbezogene Protokollierung momentan durch Netzknoten genutzter IPv6-Adressen.

Im IETF-Standard-Entwurf RFC 3633 (https://tools.ietf.org/ html/rfc3633) ist ein Verfahren zur Delegation einer Verbreitung von IPv6-Präfixen auf Basis von DHCPv6 beschrieben. Dabei werden IPv6-Präfixe auf Anforderung durch einen delegierenden Router bzw. DHCP-Server zur Verbreitung durch einen anfordernden Router freigegeben. Dies kann insbesondere über administrative Grenzen hinweg erfolgen, ohne dass der delegierenden Router bzw. DHCP-Server über Topologie-Informationen eines Teilnetzes verfügen muss, in dem freigegebene IPv6-Präfixe durch den anfordernden Router verbreitet werden.

Der IETF-Standard-Entwurf RFC 7550 (https://tools.ietf. org/html/rfc7550) thematisiert Probleme bei einer Kombinierten Nutzung zustandsorienter Optionen für DHCPv6 (Dynamic Host Configuration Protocol for IPv6). Ur-sprünglich waren nur die Optionen IA_NA für nicht temporäre Adressen und IA_TA für temporäre Adressen definiert. In praktischen Anwendungen auf Edge-Routern hat sich insbesondere eine kombinierte Nutzung der Option IA-NA und der Option IA__PD für Präfix-Delegation als problematisch erwiesen. Zur Lösung dieses Problems wird ein Verfahren entsprechend dem Oberbegriff von Patentanspruch 1 vorgeschlagen.

Der vorliegenden Erfindung liegt die Aufgabe zugrunde, ein Verfahren für eine im wesentlichen automatische Konfiguration unterschiedlicher Kommunikationsgeräte, insbesondere Endgeräte ohne Routerfunktion einerseits und Router andererseits, innerhalb eines industriellen Automatisierungssystems anzugeben sowie eine geeignete Vorrichtung zur Durchführung des Verfahrens zu schaffen.

Diese Aufgabe wird erfindungsgemäß durch ein Verfahren mit den in Anspruch 1 angegebenen Merkmalen und durch eine Konfigurationsdatenverteilereinheit für ein industrielles Automatisierungssystem mit den in Anspruch 8 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur Konfiguration von Kommunikationsgeräten eines industriellen Automatisierungssystems stellt ein erster DHCPv6-Konfigurationsserver auf erste Konfigurationsanforderungen jeweils eine IPv6-Adresskonfiguration an ein zu konfigurierendes Kommunikationsgerät bereit. Dagegen gibt ein zweiter DHCPv6-Konfigurationsserver auf zweite Konfigurationsanforderungen jeweils zumindest ein mittels Routerbekanntgabe-Nachrichten verbreitbares IPv6-Präfix für ein zu konfigurierendes Kommunikationsgerät mit Routerfunktion frei. Die ersten Konfigurationsanforderungen sind DHCPv6-Konfigurationsanforderungen mit IA_NA-Option zur Bereitstellung einer nicht-temporären IPv6-Adresse oder mit IA_TA-Option zur Bereitstellung einer temporären IPv6-Adresse, während die zweiten Konfigurationsanforderungen DHCPv6-Konfigurationsanforderungen mit IA_PD-Option für eine Präfix-Delegation sind.

Erfindungsgemäß speichert eine dem industriellen Automatisierungssystem zugeordnete Konfigurationsdatenverteilereinheit bei Empfang einer ersten eine IA_NA- oder IA_TA-Option umfassenden DHCPv6-Konfigurationsanforderung eines ersten Kommunikationsgeräts des industriellen Automatisierungssystems für eine vorgebbare Gültigkeitsdauer eine Zuordnung zwischen dem ersten Kommunikationsgerät und dem ersten DHCPv6-Konfigurationsserver und leitet anhand der gespeicherten Zuordnung während der Gültigkeitsdauer sämtliche DHCPv6-Konfigurationsanforderungen des ersten Kommunikationsgeräts an den ersten DHCPv6-Konfigurationsserver weiter. Darüber hinaus speichert die Konfigurationsdatenverteilereinheit bei Empfang einer zweiten eine IA_PD-Option umfassenden DHCPv6-Konfigurationsanforderung eines dem industriellen Automatisierungssystem zugeordneten zweiten Kommunikationsgeräts mit Routerfunktion für eine vorgebbare Gültigkeitsdauer eine Zuordnung zwischen dem zweiten Kommunikationsgerät und dem zweiten DHCPv6-Konfigurationsserver und leitet anhand der gespeicherten Zuordnung während der Gültigkeitsdauer sämtliche DHCPv6-Konfigurationsanforderungen des zweiten Kommunikationsgeräts an den zweiten DHCPv6-Konfigurationsserver weiter. Auf diese Weise ist auf Basis von DHCPv6 in einem industriellen Kommunikationsnetz eine automatische Konfiguration sowohl von Endgeräten als auch von Routern unter Beibehaltung getrennter operativer Verantwortungen für Endgerätekonfiguration und für Routerkonfiguration möglich.

Entsprechend einer vorteilhaften Weiterbildung der vorliegenden Erfindung ermittelt und speichert die Konfigurationsdatenverteilereinheit nach Ablauf der vorgebbaren Gültigkeitsdauer der Zuordnung zwischen einem Kommunikationsgerät und einem DHCPv6-Konfigurationsserver in Abhängigkeit einer nach Ablauf der Gültigkeitsdauer empfangenen DHCPv6-Konfigurationsanforderung eine aktualisierte Zuordnung zwischen dem jeweiligen Kommunikationsgerät und dem jeweiligen DHCPv6-Konfigurationsserver. Vorzugsweise löscht die Konfigurationsdatenverteilereinheit eine Zuordnung zwischen einem Kommunikationsgerät und einem Konfigurationsserver, wenn die Konfigurationsdatenverteilereinheit von diesem Kommunikationsgerät eine DHCPv6-RELEASE-Nachricht empfängt. Darüber hinaus löscht die Konfigurationsdatenverteilereinheit entsprechend einer weiteren vorteilhaften Ausgestaltung der vorliegenden Erfindung eine Zuordnung zwischen dem zweiten Kommunikationsgerät mit Routerfunktion und dem zweiten Konfigurationsserver, wenn eine Lease-Dauer eines durch den zweiten Konfigurationsserver für das zweite Kommunikationsgerät freigegebenen IPv6-Prä-fixes abgelaufen ist.

Eine Zuordnung zwischen einem Kommunikationsgerät und einem Konfigurationsserver kann beispielsweise durch eine Zuordnung zwischen einem Geräteidentifikator des jeweiligen Kommunikationsgeräts und einer IPv6-Adresse oder einem DNS-Namen des jeweiligen Konfigurationsservers gebildet werden. Dabei kann der Geräteidentifikator insbesondere ein DHCP Unique Identifier sein.

Der erste DHCPv6-Konfigurationsserver speichert vorzugsweise Informationen über an Kommunikationsgeräte vergebene IPv6-Adresskonfigurationen für eine Verwaltung von IPv6-Adress-konfigurationen im Sinn einer Stateful Address Configuration.

Die erfindungsgemäße Konfigurationsdatenverteilereinheit für ein industrielles Automatisierungssystem ist zur Durchführung eines Verfahrens entsprechend vorangehenden Ausführungen vorgesehen und geeignet. Dabei ist die Konfigurationsdatenverteilereinheit dafür ausgestaltet und eingerichtet, bei Empfang einer ersten eine IA_NA- oder IA_TA-Option umfassenden DHCPv6-Konfigurationsanforderung eines dem industriellen Automatisierungssystem zugeordneten ersten Kommunikationsgeräts für eine vorgebbare Gültigkeitsdauer eine Zuordnung zwischen dem ersten Kommunikationsgerät und einem ersten DHCPv6-Konfigurationsserver zu speichern und anhand der gespeicherten Zuordnung während der Gültigkeitsdauer sämtliche DHCPv6-Konfigurationsanforderungen des ersten Kommunikationsgeräts an den ersten DHCPv6-Konfigurationsserver weiterzuleiten. Der erste DHCPv6-Konfigurationsserver ist hierbei für eine Bereitstellung einer IPv6-Adresskonfiguration an ein zu konfigurierendes Kommunikationsgerät vorgesehen.

Darüber hinaus ist die Konfigurationsdatenverteilereinheit erfindungsgemäß dafür ausgestaltet und eingerichtet, bei Empfang einer zweiten eine IA_PD-Option umfassenden DHCPv6-Konfigurationsanforderung eines dem industriellen Automatisierungssystem zugeordneten zweiten Kommunikationsgeräts mit Routerfunktion für eine vorgebbare Gültigkeitsdauer eine Zuordnung zwischen dem zweiten Kommunikationsgerät und einem zweiten DHCPv6-Konfigurationsserver zu speichern und anhand der gespeicherten Zuordnung während der Gültigkeitsdauer sämtliche DHCPv6-Konfigurationsanforderungen des zweiten Kommunikationsgeräts an den zweiten DHCPv6-Konfigurationsserver weiterzuleiten. Dabei ist der zweite Konfigurationsserver für eine Freigabe zumindest eines IPv6-Präfixes zur Verbreitung mittels Routerbekanntgabe-Nachrichten durch ein zu konfigurierendes Kommunikationsgerät mit Routerfunktion vorgesehen.

Die vorliegende Erfindung wird nachfolgend an einem Ausführungsbeispiel anhand der Zeichnung näher erläutert. Es zeigt die
- Figur: eine schematische Darstellung eines industriellen Automatisierungssystems mit zwei DHCPv6-Servern, einem DHCPv6-Relays und einer Mehrzahl zu konfigurierender Automatisierungsgeräte mit DHCPv6-Clients.

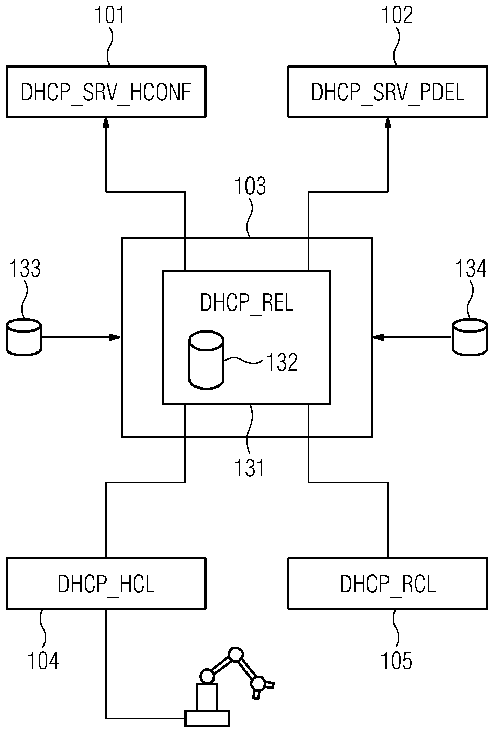

Das in Figur 1 dargestellte industrielle Automatisierungssystem umfasst einen ersten 101 und einen zweiten DHCPv6-Server 102 als Konfigurationsserver, einen Router 103 mit integriertem DHCPv6-Relay 131 als Konfigurationsdatenverteilereinheit, einen unterlagerten Router 105 mit integriertem DHCPv6-Prefix-Client sowie ein Kommunikations- bzw. Automatisierungsgerät 104 ohne Routerfunktion. Das Automatisierungsgerät 104 ist im vorliegenden Ausführungsbeispiel eine speicherprogrammierbare Steuerung einer komplexen Maschine und umfasst ein Kommunikationsmodul mit DHCPv6-Client, eine Zentraleinheit sowie eine Eingabe/Ausgabe-Einheit. Die Eingabe/Ausgabe-Einheit dient einem Austausch von Steuerungs- und Messgrößen zwischen dem Automatisierungsgerät 104 und einer durch das Automatisierungsgerät 104 gesteuerten Maschine oder Vorrichtung. Die Zentraleinheit ist insbesondere für eine Ermittlung geeigneter Steuerungsgrößen aus erfassten Messgrößen vorgesehen. Obige Komponenten des Automatisierungsgeräts 104 sind im vorliegenden Ausführungsbeispiel über ein Rückwandbus-System miteinander verbunden.

Der erste DHCPv6-Server 101 stellt auf erste Konfigurationsanforderungen jeweils eine IPv6-Adresskonfiguration an ein zu konfigurierendes erstes Kommunikationsgerät bereit. Ein solches zu konfigurierendes erstes Kommunikationsgerät ist beispielsweise das Automatisierungsgerät 104. Darüber hinaus speichert der erste DHCPv6-Server 101 im Rahmen einer Stateful Address Configuration Informationen über an erste Kommunikationsgeräte vergebene IPv6-Adresskonfigurationen. Der zweite DHCPv6-Server 102 gibt dagegen auf zweite Konfigurationsanforderungen jeweils zumindest ein mittels Routerbekanntgabe-Nachrichten bzw. Router Advertisements verbreitbares IPv6-Präfix für ein zu konfigurierendes zweites Kommunikationsgerät mit Routerfunktion frei. Ein solches zu konfigurierendes zweites Kommunikationsgerät mit Routerfunktion ist beispielsweise der unterlagerte Router 105.

Das DHCPv6-Relay 131 ist dafür konfiguriert, bei Empfang einer ersten Konfigurationsanforderung eines dem industriellen Automatisierungssystem zugeordneten ersten Kommunikationsgeräts eine Zuordnung mit vorgebbarer Gültigkeitsdauer zwischen dem ersten Kommunikationsgerät und dem ersten DHCPv6-Server 101 in einer Tabelle 132 für DHCPv6-Client-Zuordnungen zu speichern. Anhand dieser gespeicherten Zuordnung leitet das DHCPv6-Relay 131 während dieser Gültigkeitsdauer sämtliche Konfigurationsanforderungen des ersten Kommunikationsgeräts an den ersten DHCPv6-Server weiter. Die ersten Konfigurationsanforderungen sind im vorliegenden Ausführungsbeispiel DHCPv6-Konfigurationsanforderungen, insbesondere INFORMATION-REQUEST-Nachrichten oder SOLICIT-Nachrichten, mit IA_NA-Option zur Bereitstellung einer nicht-temporären IPv6-Adresse oder mit IA_TA-Option zur Bereitstellung einer temporären IPv6-Adresse. Setzt das Automatisierungsgerät 104 eine solche erste Konfigurationsanforderung ab, speichert das DHCPv6-Relay 131 in seiner Tabelle 132 für DHCPv6-Client-Zuordnungen einen DHCP Unique Identifier des Automatisierungsgeräts 104 und eine IPv6-Adresse 133 des ersten DHCPv6-Servers 101.

Außerdem ist das DHCPv6-Relay 131 ist dafür konfiguriert, bei Empfang einer zweiten Konfigurationsanforderung eines dem industriellen Automatisierungssystem zugeordneten zweiten Kommunikationsgeräts mit Routerfunktion eine Zuordnung mit vorgebbarer Gültigkeitsdauer zwischen dem zweiten Kommunikationsgerät und dem zweiten DHCPv6-Server 102 in seiner Tabelle 132 für DHCPv6-Client-Zuordnungen zu speichern. Anhand dieser gespeicherten Zuordnung leitet das DHCPv6-Relay 131 während dieser Gültigkeitsdauer sämtliche Konfigurationsanforderungen des zweiten Kommunikationsgeräts an den zweiten DHCPv6-Server 102 weiter. Die zweiten Konfigurationsanforderungen sind im vorliegenden Ausführungsbeispiel DHCPv6-Konfigurationsanforderungen, insbesondere INFORMATION-REQUEST-Nachrichten oder SOLICIT-Nachrichten, mit IA_PD-Option für eine Präfix-Delegation. Setzt der unterlagerte Router 105 eine solche zweite Konfigurationsanforderung ab, speichert das DHCPv6-Relay 131 in seiner Tabelle 132 für DHCPv6-Client-Zuordnungen einen DHCP Unique Identifier des unterlagerten Routers 105 und eine IPv6-Adresse 134 des zweiten DHCPv6-Servers 102.

Nach Ablauf einer Gültigkeitsdauer einer Zuordnung zwischen einem Kommunikationsgerät und einem DHCPv6-Server ermittelt und speichert das DHCPv6-Relay 131 in Abhängigkeit einer nach Ablauf einer Gültigkeitsdauer empfangenen Konfigurationsanforderung eine aktualisierte Zuordnung zwischen dem jeweiligen Kommunikationsgerät und einem zuzuordnenden Konfigurationsserver. Darüber hinaus löscht das DHCPv6-Relay 131 vorzugsweise eine Zuordnung zwischen einem Kommunikationsgerät und einem Konfigurationsserver, wenn das DHCPv6-Relay 131 von diesem Kommunikationsgerät eine DHCPv6-RELEASE-Nachricht empfängt. Des weiteren löscht das DHCPv6-Relay 131 vorteilhafterweise eine Zuordnung zwischen einem zweiten Kommunikationsgerät mit Routerfunktion und dem zweiten DHCPv6-Server 102, wenn eine Lease-Dauer eines durch den zweiten DHCPv6-Server für das zweite Kommunikationsgerät freigegebenen IPv6-Präfixes abgelaufen ist.

## Patentansprüche

1. Verfahren zur Konfiguration von Kommunikationsgeräten eines industriellen Automatisierungssystems, bei dem
- ein erster DHCPv6-Konfigurationsserver (101) auf erste DHCPv6-Konfigurationsanforderungen mit IA_NA-Option zur Bereitstellung einer nicht-temporären IPv6-Adresse oder mit IA_TA-Option zur Bereitstellung einer temporären IPv6-Adresse jeweils eine IPv6-Adresskonfiguration an ein zu konfigurierendes Kommunikationsgerät bereitstellt,
- ein zweiter DHCPv6-Konfigurationsserver (102) auf zweite DHCPv6-Konfigurationsanforderungen mit IA_PD-Option für eine Präfix-Delegation jeweils zumindest ein mittels Routerbekanntgabe-Nachrichten verbreitbares IPv6-Präfix für ein zu konfigurierendes Kommunikationsgerät mit Routerfunktion freigibt,
**dadurch gekennzeichnet, dass**
- eine dem industriellen Automatisierungssystem zugeordnete Konfigurationsdatenverteilereinheit (131) bei Empfang einer ersten DHCPv6-Konfigurationsanforderung mit IA_NA- oder IA_TA-Option eines ersten Kommunikationsgeräts (104) des industriellen Automatisierungssystems für eine vorgebbare Gültigkeitsdauer eine Zuordnung zwischen dem ersten Kommunikationsgerät und dem ersten DHCPv6-Konfigurationsserver speichert und anhand der gespeicherten Zuordnung während der Gültigkeitsdauer sämtliche DHCPv6-Konfigurationsanforderungen des ersten Kommunikationsgeräts an den ersten DHCPv6-Konfigurationsserver weiterleitet,
- die Konfigurationsdatenverteilereinheit (131) bei Empfang einer zweiten DHCPv6-Konfigurationsanforderung mit IA_PD-Option eines dem industriellen Automatisierungssystem zugeordneten zweiten Kommunikationsgeräts (105) mit Routerfunktion für eine vorgebbare Gültigkeitsdauer eine Zuordnung zwischen dem zweiten Kommunikationsgerät und dem zweiten DHCPv6-Konfigurationsserver speichert und anhand der gespeicherten Zuordnung während der Gültigkeitsdauer sämtliche DHCPv6-Konfigurationsanforderungen des zweiten Kommunikationsgeräts an den zweiten DHCPv6-Konfigurationsserver weiterleitet.

2. Verfahren nach Anspruch 1,
bei dem die Konfigurationsdatenverteilereinheit (131) nach Ablauf der vorgebbaren Gültigkeitsdauer der Zuordnung zwischen einem Kommunikationsgerät (104, 105) und einem DHCPv6-Konfigurationsserver (101, 102) in Abhängigkeit einer nach Ablauf der Gültigkeitsdauer empfangenen DHCPv6-Konfigurationsanforderung eine aktualisierte Zuordnung zwischen dem jeweiligen Kommunikationsgerät und dem jeweiligen DHCPv6-Konfigurationsserver ermittelt und speichert.

3. Verfahren nach einem der Ansprüche 1 oder 2,
bei dem die Zuordnung zwischen einem Kommunikationsgerät (104, 105) und einem DHCPv6-Konfigurationsserver (101, 102) durch eine Zuordnung zwischen einem Geräteidentifikator des jeweiligen Kommunikationsgeräts und einer IPv6-Adresse oder einem DNS-Namen des jeweiligen Konfigurationsservers gebildet wird.

4. Verfahren nach Anspruch 3,
bei dem der Geräteidentifikator ein DHCP Unique Identifier ist.

5. Verfahren nach einem der Ansprüche 1 bis 4,
bei dem die Konfigurationsdatenverteilereinheit (131) eine Zuordnung zwischen einem Kommunikationsgerät (104, 105) und einem DHCPv6-Konfigurationsserver (101, 102) löscht, wenn die Konfigurationsdatenverteilereinheit von diesem Kommunikationsgerät eine DHCPv6-RELEASE-Nachricht empfängt.

6. Verfahren nach einem der Ansprüche 1 bis 5,
bei dem die Konfigurationsdatenverteilereinheit (131) eine Zuordnung zwischen dem zweiten Kommunikationsgerät (105) mit Routerfunktion und dem zweiten DHCPv6-Konfigurationsserver (102) löscht, wenn eine Lease-Dauer eines durch den zweiten DHCPv6-Konfigurationsserver für das zweite Kommunikationsgerät freigegebenen IPv6-Präfixes abgelaufen ist.

7. Verfahren nach einem der Ansprüche 1 bis 6,
bei dem der erste DHCPv6-Konfigurationsserver (101) Informationen über an Kommunikationsgeräte vergebene IPv6-Adresskonfigurationen für eine Verwaltung von IPv6-Adresskonfigurationen speichert.

8. Konfigurationsdatenverteilereinheit für ein industrielles Automatisierungssystem, die dafür ausgestaltet und eingerichtet ist,
- bei Empfang einer ersten DHCPv6-Konfigurationsanforderung mit IA_NA- oder IA_TA-Option eines dem industriellen Automatisierungssystem zugeordneten ersten Kommunikationsgeräts (104) für eine vorgebbare Gültigkeitsdauer eine Zuordnung zwischen dem ersten Kommunikationsgerät und einem ersten DHCPv6-Konfigurationsserver (101) zu speichern und anhand der gespeicherten Zuordnung während der Gültigkeitsdauer sämtliche Konfigurationsanforderungen des ersten Kommunikationsgeräts an den ersten DHCPv6-Konfigurationsserver weiterzuleiten,
wobei der erste DHCPv6-Konfigurationsserver für eine Bereitstellung einer IPv6-Adresskonfiguration an ein zu konfigurierendes Kommunikationsgerät vorgesehen ist,
- bei Empfang einer zweiten DHCPv6-Konfigurationsanforderung mit IA_PD-Option eines dem industriellen Automatisierungssystem zugeordneten zweiten Kommunikationsgeräts (105) mit Routerfunktion für eine vorgebbare Gültigkeitsdauer eine Zuordnung zwischen dem zweiten Kommunikationsgerät und einem zweiten DHCPv6-Konfigurationsserver (102) zu speichern und anhand der gespeicherten Zuordnung während der Gültigkeitsdauer sämtliche Konfigurationsanforderungen des zweiten Kommunikationsgeräts an den zweiten DHCPv6-Konfigurationsserver weiterzuleiten,
wobei der zweite DHCPv6-Konfigurationsserver für eine Freigabe zumindest eines IPv6-Präfixes zur Verbreitung mittels Routerbekanntgabe-Nachrichten durch ein zu konfigurierendes Kommunikationsgerät mit Routerfunktion vorgesehen ist.

## Claims

1. Method for configuring communication devices in an industrial automation system, in which
- a first DHCPv6 configuration server (101) responds to first DHCPv6 configuration requests having an IA_NA option for providing a non-temporary IPv6 address or having an IA_TA option for providing a temporary IPv6 address by providing a respective IPv6 address configuration to a communication device to be configured,
- a second DHCPv6 configuration server (102) responds to second DHCPv6 configuration requests with an IA-PD option for a prefix delegation by enabling at least one respective IPv6 prefix disseminable by means of router notification messages for a communication device to be configured that has a router function,
**characterized in that**
- a configuration data distribution unit (131) associated with the industrial automation system, on receiving a first DHCPv6 configuration request having an IA_NA or IA_TA option from a first communication device (104) in the industrial automation system, stores an association between the first communication device and the first DHCPv6 configuration server for a prescribable validity period and takes the stored association as a basis for forwarding, during the validity period, all of the DHCPv6 configuration requests from the first communication device to the first DHCPv6 configuration server,
- the configuration data distribution unit (131), on receiving a second DHCPv6 configuration request having an IA_PD option from a second communication device (105), associated with the industrial automation system, having a router function, stores an association between the second communication device and the second DHCPv6 configuration server for a prescribable validity period and takes the stored association as a basis for forwarding, during the validity period, all of the DHCPv6 configuration requests from the second communication device to the second DHCPv6 configuration server.

2. Method according to Claim 1,
in which the configuration data distribution unit (131), after expiry of the prescribable validity period for the association between a communication device (104, 105) and a DHCPv6 configuration server (101, 102), takes a DHCPv6 configuration request received after expiry of the validity period as a basis for ascertaining and storing an updated association between the respective communication device and the respective DHCPv6 configuration server.

3. Method according to either of Claims 1 and 2,
in which the association between a communication device (104, 105) and a DHCPv6 configuration server (101, 102) is formed by an association between a device identifier of the respective communication device and an IPv6 address or a DNS name of the respective configuration server.

4. Method according to Claim 3,
in which the device identifier is a DHCP unique identifier.

5. Method according to one of Claims 1 to 4,
in which the configuration data distribution unit (131) erases an association between a communication device (104, 105) and a DHCPv6 configuration server (101, 102) if the configuration data distribution unit receives a DHCPv6 RELEASE message from this communication device.

6. Method according to one of Claims 1 to 5,
in which the configuration data distribution unit (131) erases an association between the second communication device (105) having the router function and the second DHCPv6 configuration server (102) if a lease period for an IPv6 prefix enabled for the second communication device by the second DHCPv6 configuration server has expired.

7. Method according to one of Claims 1 to 6,
in which the first DHCPv6 configuration server (101) stores information about IPv6 address configurations allocated to communication devices for management of IPv6 address configurations.

8. Configuration data distribution unit for an industrial automation system, which unit is configured and set up so as, on receiving a first DHCPv6 configuration request having an IA_NA or IA_TA option from a first communication device (104) associated with the industrial automation system, to store an association between the first communication device and a first DHCPv6 configuration server (101) for a prescribable validity period and to take the stored association as a basis for forwarding, during the validity period, all of the configuration requests from the first communication device to the first DHCPv6 configuration server, wherein the first DHCPv6 configuration server is provided for providing an IPv6 address configuration to a communication device to be configured, on receiving a second DHCPv6 configuration request having an IA_PD option from a second communication device (105), associated with the industrial automation system, having a router function, to store an association between the second communication device and a second DHCPv6 configuration server (102) for a prescribable validity period and to take the stored association as a basis for forwarding, during the validity period, all of the configuration requests from the second communication device to the second DHCPv6 configuration server,
wherein the second DHCPv6 configuration server is provided for enabling at least one IPv6 prefix for dissemination by means of router notification messages by a communication device to be configured that has a router function.

## Revendications

1. Procédé de configuration d'appareils de communication d'un système d'automatisation industriel, dans lequel
- un premier serveur (101) de configuration DHCPv6 met à disposition d'un appareil de communication à configurer, sur de premières demandes de configuration DHCPv6 à option IA_NA, pour la mise à disposition d'une adresse IPv6 non temporaire ou à option IA_TA, pour la mise à disposition d'une adresse IPv6 temporaire, respectivement une configuration d'adresse IPv6,
- un deuxième serveur (102) de configuration DHCPv6 sur des deuxièmes demandes de configuration DHCPv6 à option IA_PD, pour une délégation de préfixe, libère respectivement au moins un préfixe IPv6, pouvant être diffusé au moyen de messages de communiqué de routage, pour un appareil de communication à configurer à fonction de routage,
**caractérisé en ce que**
- une unité (131) de répartition de données de configuration affectée au système d'automatisation industriel mémorise, à la réception d'une première demande de configuration DHCPv6 à option IA_NA ou IA_TA d'un premier appareil (104) de communication du système d'automatisation industriel, pour une durée de validité pouvant être donnée à l'avance, une affectation entre le premier appareil de communication et le premier serveur de configuration DHCPv6 et, à l'aide de l'affectation mémorisée, achemine, pendant la durée de validité, l'ensemble des demandes de configuration DHCPv6 du premier appareil de communication au premier serveur de configuration DHCPv6,
- l'unité (131) de répartition de données de configuration mémorise, à la réception d'une deuxième demande de configuration DHCPv6 à option IA_PD d'un deuxième appareil (105) de communication affecté au système d'automatisation industriel à fonction de routage, pour une durée de validité pouvant être donnée à l'avance, une affectation entre le deuxième appareil de communication et le deuxième serveur de configuration DHCPv6 et, à l'aide de l'affectation mémorisée pendant la durée de validité, achemine l'ensemble des demandes de configuration DHCPv6 du deuxième appareil de communication au deuxième serveur de configuration DHCPv6.

2. Procédé suivant la revendication 1,
dans lequel l'unité (131) de répartition de données de configuration détermine et mémorise, après l'écoulement de la durée de validité pouvant être donnée à l'avance de l'affectation entre un appareil (104, 105) de communication et un serveur (101, 102) de configuration DHCPv6, en fonction d'une demande configuration DHPCv6 reçue après l'écoulement de la durée de validité, une affectation mise à jour entre l'appareil de communication respectif et le serveur de configuration DHCPv6 respectif.

3. Procédé suivant l'une des revendications 1 ou 2,
dans lequel on forme l'affectation entre un appareil (104, 105) de communication et un serveur (101, 102) de configuration DHCPv6, par une affectation entre un identificateur d'appareil de l'appareil de communication respectif et une adresse IPv6 ou une dénomination DNS du serveur de configuration respectif.

4. Procédé suivant la revendication 3,
dans lequel l'identificateur d'appareil est un DHCP Unique Idfentifier.

5. Procédé suivant l'une des revendications 1 à 4,
dans lequel l'unité (131) de répartition de données de configuration efface une affectation entre un appareil (104, 105) de communication et un serveur (101, 102) de configuration DHCPv6, si l'unité de répartition de données de configuration reçoit un message DHCPv6 RELEASE de cet appareil de communication.

6. Procédé suivant l'une des revendications 1 à 5,
dans lequel l'unité (131) de répartition de données de configuration efface une affectation entre le deuxième appareil (105) de communication à fonction de routage et le deuxième serveur (102) de configuration DHCPv6, si une durée lease d'un préfixe IPv6 libéré pour le deuxième appareil de communication par le deuxième serveur de configuration DHCPv6 s'est écoulée.

7. Procédé suivant l'une des revendications 1 à 6,
dans lequel le premier serveur (101) de configuration DHCPv6 mémorise, pour une gestion des configurations d'adresse IPv6, des informations sur des configurations d'adresse IPv6 données à des appareils de communication.

8. Unité de répartition de données de configuration pour un système d'automatisation industriel, qui est conformé et conçu,
- pour, à la réception d'une première demande de configuration DHCPv6 à option IA_NA ou IA_TA d'un premier appareil (104) de communication affecté au système d'automatisation industriel pendant une durée de validité pouvant être donnée à l'avance, mémoriser une affectation entre le premier appareil de communication et un premier serveur (101) de configuration DHCPv6 et, à l'aide de l'affectation mémorisée, acheminer, pendant la durée de validité, l'ensemble des demandes de configuration du premier appareil de communication au premier serveur de configuration DHCPv6,
le premier serveur de configuration DHCPv6 étant prévu pour mettre à disposition d'un appareil de communication à configurer une configuration d'adresse IPv6,
- à la réception d'une deuxième demande de configuration DHCPv6 à option IA_PD d'un deuxième appareil (105) de communication affecté au système d'automatisation industriel à fonction de routage, pour mémoriser, pendant une durée de validité pouvant être donnée à l'avance, une affectation entre le deuxième appareil de communication et un deuxième serveur (102) de configuration et, à l'aide de l'affectation mémorisée, acheminer, pendant la durée de validité, l'ensemble des demandes de configuration du deuxième appareil de communication au deuxième serveur de configuration DHCPv6,
le deuxième serveur de configuration DHCPv6 étant prévu pour une libération d'au moins un préfixe IPv6 pour la diffusion, au moyens de messages de communiqué de routage, par un appareil de communication à configurer à fonction de routage.
